# EUROPEAN PATENT APPLICATION

(11) **EP 4 764 802 A1**
(43) Date of publication of application: **24.06.2026**
(21) Application number: 24854552.7
(22) Date of filing: 14.08.2024
(51) Int. Cl.: G06F 3/04842, G06F 3/04812

(54) **DATA ITEM DISPLAY METHOD AND APPARATUS, AND DEVICE, READABLE STORAGE MEDIUM AND PRODUCT**

(30) Priority: 15.08.2023 CN 202311031271
(71) Applicant: Lemon Inc., Grand Cayman, KY1-1205 (KY)
(72) Inventor: HE, Shengfan, Beijing 100028 (CN); SHEN, Yiyang, Beijing 100028 (CN)
(74) Representative: Marks & Clerk LLP
(86) International application number: PCT/SG2024/050517
(87) International publication number: WO 2025/038038

(57) **Abstract**

Provided in the embodiments of the present disclosure are a data item display method and apparatus, and a device, a readable storage medium and a product. The method comprises : displaying a preset target table in a display page, wherein the target table comprises a plurality of data items, and a region corresponding to at least some data items is formed by combining at least two rows of preset cells in one column; in response to a switching operation triggered by a user in the display page, for each data item, if the display page comprises the region corresponding to the data item, presetting a display position in the region corresponding to the data item, so as to fixedly display the data item. On the basis of the embodiments of the present disclosure, data items can be prevented from sliding out of corresponding regions of the data items during sliding. For display devices with different display sizes, a user can more directly view, in a target table, complete data items and association relationships between the data items.

## Description

The present application claims priority to Chinese Patent Application No. 202311031271.9, filed on August 15, 2023, which is incorporated herein by reference in its entirety as a part of the present application.

### TECHNICAL FIELD

Embodiments of the present disclosure relate to a data item display method and a device, an apparatus, a readable storage medium, and a product.

### BACKGROUND

A table serves as a means of organizing and arranging data, and is widely applied in scenarios such as communication, scientific research, and data analysis activities. When displaying the table, if a data item in a previous column has an association relationship with a plurality of data items in a subsequent column, the data item in the previous column may be repeatedly displayed.

In the related art, a row merging method is used to avoid repeated and redundant data presentation in some cases.

However, when the data item in the previous column corresponds to a large number of data items in the subsequent column, the data item in the previous column, when swiping-down, may swipe out of a viewing region. As a result, a user cannot intuitively determine the association relationship between the data item in the previous column and the data items in the subsequent column. Particularly, for an apparatus with a small display interface, there may be a situation where data values in a merged row cannot be seen.

### SUMMARY

Embodiments of the present disclosure provide a data item display method and device, an apparatus, a readable storage medium, and a product, in order to solve the technical problem that when a data item in a previous column is swiped out of a viewing region, a user cannot intuitively determine an association relationship between the data item in the previous column and data items in a subsequent column.

In a first aspect, an embodiment of the present disclosure provides a data item display method. The method includes:
displaying a preset target table in a display page, the target table including a plurality of data items, where a region corresponding to at least a portion of the data items is formed by merging at least two rows of preset cells in one column; and
in response to a switching operation triggered by a user within the display page, for each data item and in response to the display page including an area corresponding to the data item, fixedly displaying the data item at a preset display position within the region corresponding to the data item.

In a second aspect, an embodiment of the present disclosure provides a data item display device. The device includes:
a display module, configured to display a preset target table in a display page, the target table including a plurality of data items, where a region corresponding to at least a portion of the data items is formed by merging at least two rows of preset cells in one column; and
a processing module, configured to, in response to a switching operation triggered by a user in the display page, for each data item and in response to the display page including a region corresponding to the data item, fixedly display the data item at a preset display position within the region corresponding to the data item.

In a third aspect, an embodiment of the present disclosure provides an electronic apparatus. The electronic apparatus includes a processor and a memory, the memory has computer-executable instructions stored therein, and the processor executes the computer-executable instructions stored in the memory, to cause the at least one processor to perform the data item display method according to the first aspect and various possible designs of the first aspect.

In a fourth aspect, an embodiment of the present disclosure provides a computer-readable storage medium having computer-executable instructions stored therein that, when executed by a processor, cause the data item display method according to the first aspect and various possible designs of the first aspect to be implemented.

In a fifth aspect, an embodiment of the present disclosure provides a computer program product including a computer program that, when executed by a processor, causes the data item display method according to the first aspect and various possible designs of the first aspect is implemented.

### BRIEF DESCRIPTION OF DRAWINGS

In order to more clearly describe the technical solutions in the embodiments of the present disclosure or in the related art, the accompanying drawings for describing the embodiments or the related art will be briefly described below. Apparently, the accompanying drawings in the description below show some embodiments of the present disclosure, and those of ordinary skill in the art may still derive other accompanying drawings from these accompanying drawings without creative efforts.
Fig. 1 is a schematic flowchart of a data item display method according to an embodiment of the present disclosure;
Fig. 2 is a schematic diagram of an interface interaction according to an embodiment of the present disclosure;
Fig. 3 is a schematic flowchart of a data item display method according to another embodiment of the present disclosure;
Fig. 4 is a schematic diagram of another interface interaction according to an embodiment of the present disclosure;
Fig. 5 is a schematic structural diagram of a data item display device according to an embodiment of the present disclosure; and
Fig. 6 is a schematic structural diagram of an electronic apparatus according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It should be understood that before the use of the technical solutions disclosed in the embodiments of the present disclosure, a user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic apparatus, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Further, the pop-up window may further include a selection control for the user to choose whether to "agree" or "disagree" to provide the personal information to the electronic apparatus.

It should be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

In order to solve the technical problem that when a data item in a previous column is swiped out of a viewing region, the user cannot intuitively determine an association relationship between the data item in the previous column and data items in a subsequent column, the present disclosure provides a data item display method and device, an apparatus, a readable storage medium, and a product.

It should be noted that the data item display method and device, the apparatus, the readable storage medium, and the product provided in the present disclosure may be applied in any application scenario of table content presentation.

A data item formed by merging a plurality of preset cells may exist in a current table. For example, if a data item in a previous column has an association relationship with a plurality of data items in a subsequent column, respectively, the data item in the previous column is a data item formed by merging the plurality of preset cells. Therefore, a region covered by the data item formed by merging the plurality of preset cells is larger than a region covered by another data item displayed in a single cell. The user may switch displayed content within a current display page through a swiping operation. In a switching process, for the data item formed by merging the plurality of preset cells, the data item may be swiped out of the current page, and as a result, the user cannot intuitively determine an association relationship between data items in the table, and consequently, cannot perform precise content browsing operation in the table.

In the process of solving the above-mentioned technical problem, the inventors found through research that, in order to prevent the technical problem that the data item in the table is swiped out of the viewing region in the swiping process, it may be detected for each data item during swiping that whether the current display page includes a region corresponding to the data item, and if the current display page includes a region corresponding to the data item, the data item is fixedly displayed at a preset display position within the region corresponding to the data item. Therefore, for each data item, the user can intuitively determine an association relationship between the data item and another data item in the table, thereby avoiding the need for frequent swiping of the page to view the data item formed by merging the plurality of preset cells, and thus improving table browsing efficiency.

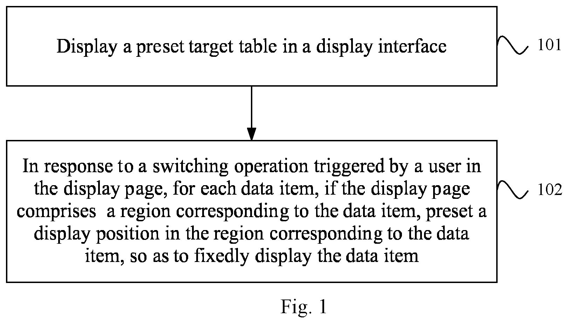

Fig. 1 is a schematic flowchart of a data item display method according to an embodiment of the present disclosure. As shown in Fig. 1, the method includes:
Step 101: Displaying a preset target table in a display page, the target table including a plurality of data items, where a region corresponding to at least a portion of the data items is formed by merging at least two rows of preset cells in one column.

An execution entity of the embodiment is a data item display device, and the data item display device may be coupled to a terminal apparatus and thus can display content of the data items in the target table based on a trigger operation of a user. Alternatively, the data item display device may be coupled to a server that is communicatively connected to the terminal apparatus, so that the data item display device can obtain an instruction sent by the terminal apparatus based on the trigger operation of the user, and control the terminal apparatus to display the content of the data items in the target table based on the instruction.

In the implementation manner, the user may view the target table on the terminal apparatus, and a display page of the terminal apparatus may display a preset target table. The target table may be a table that is generated by the user according to actual needs, or a table that is selected and opened from a plurality of tables by the user according to actual needs, which is not limited in the present disclosure.

The target table includes the plurality of data items. The target table may include a data item having a coverage region of a single preset cell, and also include a data item having a coverage region formed by merging a plurality of preset cells. There may be a preset association relationship between the data items in the target table.

For example, there is a data item in a first column of the target table, and a region corresponding to the data item is a region formed by seven preset cells. The data item may have an association relationship with seven data items in a second column that each have a coverage region of a single preset cell.

Step 102: In response to a switching operation triggered by a user in the display page, for each of the plurality of data items and in response to the display page comprising a region corresponding to the data item, fixedly displaying the data item at a preset display position within the region corresponding to the data item.

In this implementation manner, in the process of browsing the target table, the user may perform a switching operation on table content displayed within a current display page according to actual needs. For example, the user may realize switching of the content by swiping a swiping wheel of a mouse, or may realize switching of the content through the drag-and-drop manner, or may realize switching of the content by performing a drag-and-drop operation on a preset progress bar. The present disclosure does not limit the switching operation.

In response to the switching operation, in order to prevent any data item from being swiped out of a viewing region, it may be detected for each data item whether the current display page includes a region corresponding to the data item, and if the current display page includes a region corresponding to the data item, the data item is fixedly displayed at the preset display position within the region corresponding to the data item. The preset display position may be a top display position within the region corresponding to the data item.

Taking a practical application as an example, there is a data item in the target table, and a region corresponding to the data item is formed by merging nine preset cells. In response to the switching operation of the user, two-thirds of the region corresponding to the data item is swiped out of the display page. In order to prevent the data item from being swiped out of the viewing region, the data item may be fixedly displayed at a top of the remaining one-third region in the display page. Therefore, when the user switches, through swiping, displayed content within the target table, each data item currently present in the display page can be fully displayed.

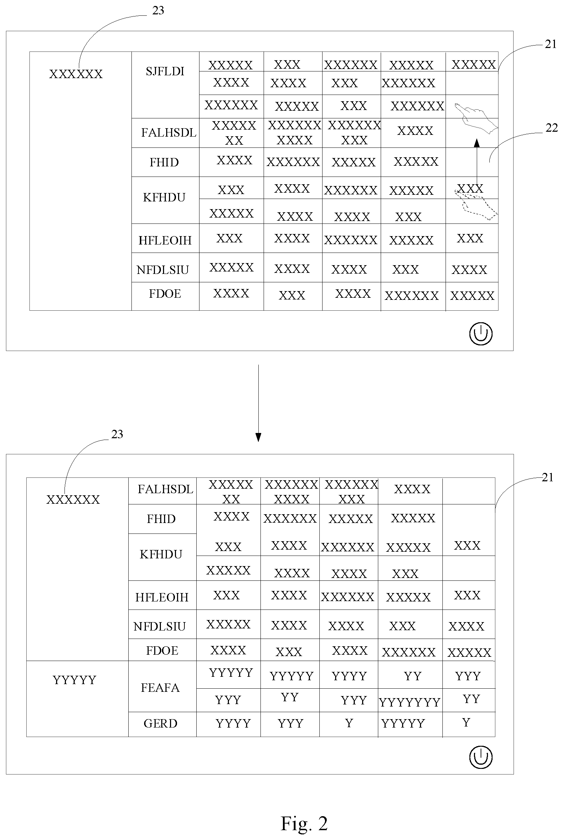

Fig. 2 is a schematic diagram of an interface interaction according to an embodiment of the present disclosure. As shown in Fig. 2, a display page 21 may display a target table 22, and the target table 22 may include a plurality of data items 23. For each data item 23, in response to a switching operation triggered by the user, if a region corresponding to the data item 23 is still in the display page 21, the data item 23 may be fixedly displayed at a preset display position within the region corresponding to the data item 23.

According to the data item display method provided in the embodiment, after the target table is displayed in the display page, in response to a swiping operation triggered by the user, if it is determined for each data item that the display page includes the region corresponding to the data item, the data item is fixedly displayed at the preset display position within the region corresponding to the data item. In this way, each data item can be prevented from being swiped out of corresponding region in the swiping process. The user can be allowed for more intuitive browsing of content in the target table. Furthermore, with the above-mentioned method, the user can realize viewing of data items in a merged row on display interfaces of different display sizes.

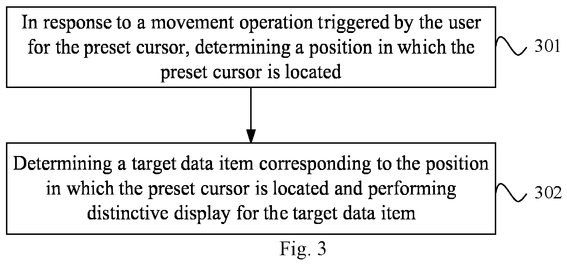

Fig. 3 is a schematic flowchart of a data item display method according to another embodiment of the present disclosure. On the basis of any one of the embodiments described above, a preset cursor is further displayed in the display page. As shown in Fig. 3, the method further includes:
Step 301: Determining a position in which the preset cursor is located in response to a movement operation triggered by the user for the preset cursor.
Step 302: Determining a target data item corresponding to the position in which the preset cursor is located and performing distinctive display for the target data item.

In this embodiment, the preset cursor may further be displayed in the display page. The user may perform selection of the data item by moving the preset cursor, and thus can perform an editing operation on the data item.

Accordingly, the user may perform a movement operation on the preset cursor by moving a mouse. Alternatively, the user may control the preset cursor to move by dragging-and-dropping the preset cursor, which is not limited in the present disclosure.

The position in which the preset cursor is located may be determined in response to the movement operation. To allow the user to more intuitively determine a current position of the cursor, a target data item in the target table that corresponds to the display position may be determined, and distinctive display may be performed for the target data item.

The distinctive display includes, but is not limited to, highlighted display, bold display, underlined display, enlarged display, and other display operations that distinguish the target data item from other data items.

Further, on the basis of any one of the embodiments described above, step 301 includes:
in response to the movement operation triggered by the user for the preset cursor, determining the position of the preset cursor in response to detecting that duration of the preset cursor staying at any position in the display page exceeds a preset time threshold.

In this embodiment, in response to the movement operation of the user on the preset cursor, duration of the preset cursor staying at each display position may also be determined. If it is detected that duration of the preset cursor staying at any position exceeds the preset time threshold, the position of the preset cursor may be determined.

Taking a practical application as an example, if the user controls the preset cursor to stay at a certain position for a long time, it indicates that the user may need to view the data item at the display position. **In** this case, the distinctive display may be performed for the target data item corresponding to the display position.

According to the data item display method provided in this embodiment, in response to the movement operation triggered by the user for the preset cursor, the distinctive display is performed for the target data item at the display position at which the preset cursor stays, so that the user can more intuitively determine the current position of the preset cursor, thereby improving table browsing efficiency.

Further, on the basis of any one of the embodiments described above, there is a preset association relationship between at least a portion of data items in the target table, and after step 301, the method further includes:
Determining a target data item corresponding to the position in which the preset cursor is located;
Determining at least one associated data item that has the preset association relationship with the target data item in the target table; and
Performing distinctive display for the target data item and the at least one associated data item.

In this embodiment, there may be a preset association relationship between the data items in the target table. After the position in which the preset cursor is currently located is determined, in order to allow the user to more intuitively view the target data item corresponding to the position in which the preset cursor is currently located and an associated data item that has the preset association relationship with the target data item, distinctive display may be performed for the target data item corresponding to the position in which the preset cursor is currently located and the associated data item that has the preset association relationship with the target data item.

Optionally, the target data item corresponding to the position in which the preset cursor is located may be determined in response to the movement operation triggered by the user for the preset cursor. The at least one associated data item that has the preset association relationship with the target data item is determined in the target table. Distinctive display is performed for the target data item and the at least one associated data item.

The distinctive display includes, but is not limited to, highlighted display, bold display, underlined display, enlarged display, and other display operations that distinguish the target data item and the at least one associated data item from other data items.

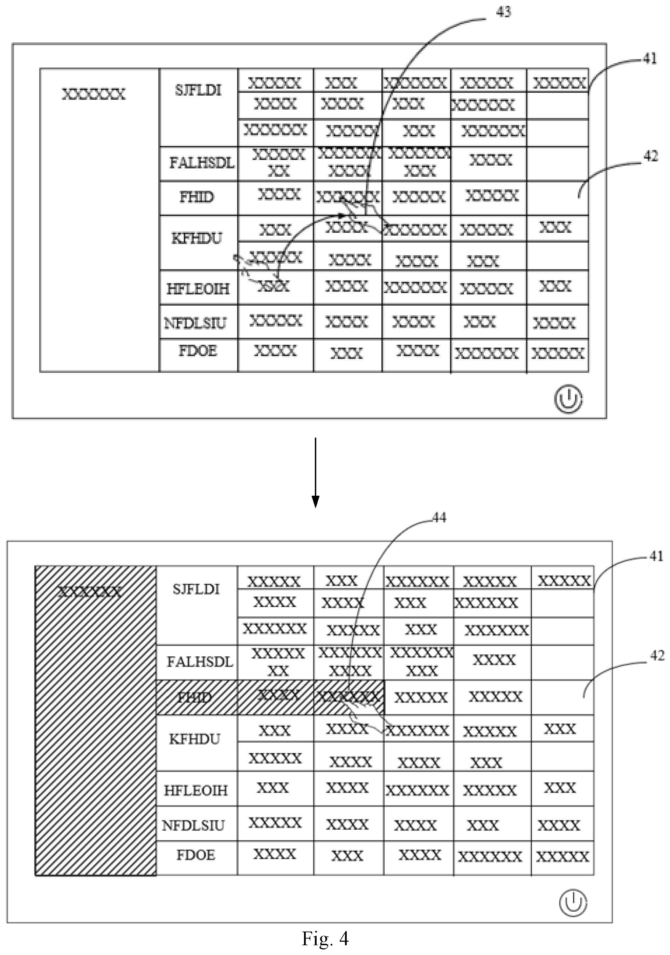

Fig. 4 is a schematic diagram of another interface interaction according to an embodiment of the present disclosure. As shown in Fig. 4, a target table 42 and a preset cursor 43 are displayed on a display page 41. A display position in which the preset cursor 43 is located may be determined in response to a movement operation triggered by the user for the preset cursor 43. Distinctive display is performed for a target data item 44 displayed at the display position and each associated data item that has an association relationship with the target data item 44.

According to the data item display method provided in this embodiment, in response to the movement operation triggered by the user for the preset cursor, the distinctive display is performed for the target data item at the display position at which the preset cursor stays and the at least one associated data item that has the preset association relationship with the target data item, so that on the basis of more intuitive determination of the current display position of the preset cursor, the user can gain a more intuitive understanding of association relationships between the target data item and other data items in the target table.

Optionally, on the basis of any one of the embodiments described above, determining the at least one associated data item that has the preset association relationship with the target data item includes in the target table:
Determining a target data column in which the target data item is located in the target table; and
Determining at least one associated data item that has the preset association relationship with the target data item in at least one column of the target table whose column number is less than a column number of the target data column.

In this embodiment, after the target data item corresponding to the position in which the preset cursor is located is determined in response to the movement operation triggered by the user for the preset cursor, the target data item may have the preset association relationship with at least one data item in a preceding column of the target data item in the target table. Therefore, distinctive display may be performed for the target data item and the at least one associated data item that is in the preceding column of the target data item and has the preset association relationship with the target data item.

Optionally, after the position in which the preset cursor is located is determined in response to the movement operation triggered by the user for the preset cursor, the position in which the preset cursor is located and/or the target data column in which the target data item corresponding to the position is located may be determined. The at least one associated data item, in at least one data column of the target table whose column number is less than that of the target data column, that has the preset association relationship with the target data item may be determined. Therefore, distinctive display can subsequently be performed for the target data item and the at least one associated data item, in the at least one data column whose column number is less than that of the target data column, that has the preset association relationship with the target data item.

According to the data item display method provided in this embodiment, after the target data item corresponding to the position in which the preset cursor is located is determined in response to the movement operation triggered by the user for the preset cursor, the at least one associated data item, in at least one data column of the target table whose column number is less than that of the target data column, that has the preset association relationship with the target data item is determined, so that distinctive display can be performed for the target data item and the at least one associated data item, in the at least one data column whose column number is less than that of the target data column, that has the preset association relationship with the target data item. In this way, the user can more intuitively view the target data item corresponding to the display position at which the preset cursor currently stays and the at least one associated data item that is in a preceding column of the target data item and has the preset association relationship with the target data item.

Further, on the basis of any one of the embodiments described above, the method further includes:
In response to a lookup operation triggered by the user and based on a lookup parameter input by the user, determining a data item to be displayed that the user looks up; and
Performing distinctive display for the data item to be displayed and at least one associated data item that has the preset association relationship with the data item to be displayed.

In this embodiment, after the target table is displayed in the display page, the user may perform a data lookup operation based on the target table. In response to the lookup operation triggered by the user, a data item to be displayed that the user currently looks up may be determined.

Optionally, when triggering the lookup operation, the user may input a lookup parameter, where the lookup parameter includes, but is not limited to, a key field, row and column information, and other content. In response to the lookup operation triggered by the user, the data item to be displayed that the user currently looks up may be determined based on the lookup parameter input by the user. For example, the user may look up the data item to be displayed based on row and column numbers, or may look up the data item to be displayed based on a preset keyword, which is not limited in the present disclosure.

To allow the user to more intuitively view the data item to be displayed that is currently looked up, distinctive display may be performed for the data item to be displayed.

Optionally, to allow the user to have further understanding of at least one associated data item that has the preset association relationship with the data item to be displayed, distinctive display may be performed for the data item to be displayed and the at least one associated data item that has the preset association relationship with the data item to be displayed, respectively.

The distinctive display includes, but is not limited to, highlighted display, bold display, underlined display, enlarged display, and other display operations that distinguish the data item to be displayed and the at least one associated data item that has the preset association relationship with the data item to be displayed from other data items.

According to the data item display method provided in this embodiment, the distinctive display is performed for the data item to be displayed that the user currently looks up and the at least one associated data item which is related to the data item, so that the user can more intuitively view the data item to be displayed that is currently looked up and the at least one associated data item associated therewith.

Further, on the basis of any one of the embodiments described above, the method further includes:
In response to a trigger operation of the user for any data item in a first column of the target table, determining at least one associated data item in the target table that has the preset association relationship with a triggered data item currently triggered by the user; and
Performing distinctive display for the triggered data item and the at least one associated data item that has the preset association relationship with the triggered data item.

In this embodiment, there may be a preset association relationship between the data items in the target table. After the target table is displayed in the display page, the user may perform a trigger operation on the data item in the target table according to actual needs, so as to view the data item in detail.

Optionally, the user may view a data item in the first column of the target table. To allow the user to more intuitively view the triggered data item that is currently triggered and association relationships with other data items, the at least one associated data item that has the preset association relationship with the triggered data item currently triggered by the user is determined from the target table in response to the trigger operation of the user for any data item in the first column of the target table. Distinctive display is performed for the triggered data item and the at least one associated data item that has the preset association relationship with the triggered data item.

The distinctive display includes, but is not limited to, highlighted display, bold display, underlined display, enlarged display, and other display operations that distinguish the triggered data item and the at least one associated data item associated therewith from other data items.

According to the data item display method provided in this embodiment, the distinctive display is performed for the triggered data item and the at least one associated data item associated therewith in response to the trigger operation of the user for the triggered data item in the first column of the target table, thereby allowing more intuitive display of the association relationships between the triggered data item and other data items.

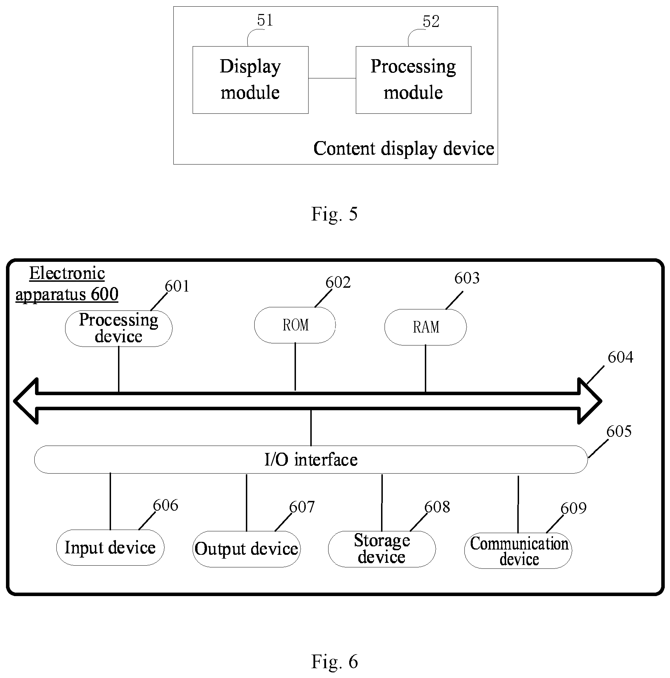

Fig. 5 is a schematic structural diagram of a data item display device according to an embodiment of the present disclosure. As shown in Fig. 5, the device includes: a display module 51 and a processing module 52. The display module 51 is configured to display a preset target table in a display page, the target table including a plurality of data items, where a region corresponding to at least a portion of the data items is formed by merging at least two rows of preset cells in one column. The processing module 52 is configured to, in response to a switching operation triggered by a user in the display page, fixedly display, for each data item in response to the display page including a region corresponding to the data item, the data item at a preset display position within the region corresponding to the data item.

Further, on the basis of any one of the embodiments described above, a preset cursor is further displayed within the display page. The device further includes: a determination module configured to determine a position in which the preset cursor is located in response to a movement operation triggered by the user for the preset cursor; and a display module configured to determine a target data item corresponding to the position in which the preset cursor is located and perform distinctive display for the target data item.

Further, on the basis of any one of the embodiments described above, there is a preset association relationship between at least a portion of data items in the target table. The device further includes: a determination module configured to determine a target data item corresponding to the position in which the preset cursor is located. The determination module is further configured to determine, in the target table, at least one associated data item that has the preset association relationship with the target data item. A display module is configured to perform distinctive display for the target data item and the at least one associated data item.

Further, on the basis of any one of the embodiments described above, the determination module is configured to: determine a target data column in which the target data item is located in the target table; and determine at least one associated data item that has the preset association relationship with the target data item in at least one data column of the target table whose column number is less than that of the target data column.

Further, on the basis of any one of the embodiments described above, the determination module is further configured to, in response to the movement operation triggered by the user for the preset cursor, determine the position of the preset cursor in response to detecting that duration of the preset cursor staying at any position in the display page exceeds a preset time threshold.

Further, on the basis of any one of the embodiments described above, the device further includes: a determination module configured to determine, in response to a lookup operation triggered by the user and based on a lookup parameter input by the user, a data item to be displayed that the user looks up; and a display module configured to perform distinctive display for the data item to be displayed and at least one associated data item that has the preset association relationship with the data item to be displayed.

Further, on the basis of any one of the embodiments described above, the device further includes: a determination module configured to determine, in response to a trigger operation of the user for any data item in a first column of the target table, at least one associated data item in the target table that has the preset association relationship with a triggered data item currently triggered by the user; and a display module configured to perform distinctive display for the triggered data item and the at least one associated data item that has the preset association relationship with the triggered data item.

The apparatus provided in this embodiment may be configured to perform the technical solution of the method embodiment described above. The implementation principle and technical effects thereof are similar, and are not described herein again in this embodiment.

To implement the embodiments described above, an embodiment of the present disclosure further provides an electronic apparatus. The electronic apparatus includes a processor and a memory, and the memory has computer-executable instructions stored therein, and the processor executes the computer-executable instructions stored in the memory, to cause the processor to perform the data item display method according to any one of the embodiments.

Fig. 6 is a schematic structural diagram of an electronic apparatus according to an embodiment of the present disclosure. As shown in Fig. 6, the electronic apparatus 600 may be a terminal apparatus or a server. The terminal apparatus may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (e.g., a vehicle navigation terminal), and a fixed terminal such as a digital TV and a desktop computer. The electronic apparatus shown in Fig. 6 is merely an example, and shall not impose any limitation on the function and scope of use of the embodiments of the present disclosure.

As shown in Fig. 6, the electronic apparatus 600 may include a processing device (for example, a central processing unit or a graphics processing unit) 601 that may perform a variety of appropriate actions and processing based on a program stored in a read-only memory (ROM) 602 or a program loaded from a storage device 608 into a random access memory (RAM) 603. The RAM 603 further stores various programs and data required for the operation of the electronic apparatus 600. The processing device 601, the ROM 602, and the RAM 603 are connected to one another through a bus 604. An input/output (I/O) interface 605 is also connected to the bus 604.

Generally, the following device may be connected to the I/O interface 605: an input device 606 including, for example, a touchscreen, a touchpad, a keyboard, a mouse, a camera, a microphone, an accelerometer, and a gyroscope; an output device 607 including, for example, a liquid crystal display (LCD), a speaker, and a vibrator; the storage device 608 including, for example, a magnetic tape and a hard disk drive; and a communication device 609. The communication device 609 may allow the electronic apparatus 600 to perform wireless or wired communication with other devices to exchange data. Although Fig. 6 shows the electronic apparatus 600 having various device, it should be understood that it is not required to implement or have all of the shown means. It may be an alternative to implement or have more or fewer device.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication device 609, installed from the storage device 608, or installed from the ROM 602. When the computer program is executed by the processing device 601, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, devices, or members, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, device, or member. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, device, or member. The program code contained in the computer-readable medium may be transmitted by any suitable medium, including but not limited to: electric wires, optical cables, radio frequency (RF), and the like, or any suitable combination thereof.

In order to implement the above-mentioned embodiments, an embodiment of the present disclosure further provides a computer-readable storage medium, having computer-executable instructions stored therein that, when executed by a processor, cause the data item display method according to any one of the above-mentioned embodiments to be implemented.

In order to implement the embodiments described above, an embodiment of the present disclosure further provides a computer program product including a computer program that, when executed by a processor, causes the data item display method according to any one of the above-mentioned embodiments to be implemented.

The above-mentioned computer-readable medium may be included in the above-mentioned electronic apparatus. Alternatively, the computer-readable medium may exist independently, without being assembled into the electronic apparatus.

The above-mentioned computer-readable medium carries one or more programs that, when executed by the electronic apparatus, cause the electronic apparatus to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two Internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, device, or apparatus. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, a data item display method is provided. The method includes:
Displaying a preset target table in a display page, the target table comprising a plurality of data items, wherein a region corresponding to at least a portion of the plurality of data items is formed by merging at least two rows of preset cells in one column; and
In response to a switching operation triggered by a user in the display page, for each of the plurality of data items and in response to the display page comprising a region corresponding to the data item, fixedly displaying the data item at a preset display position within the region corresponding to the data item.

According to one or more embodiments of the present disclosure, a preset cursor is further displayed in the display page. The method further includes:
In response to a movement operation triggered by the user for the preset cursor, determining a position in which the preset cursor is located; and
Determining a target data item corresponding to the position in which the preset cursor is located and performing distinctive display for the target data item.

According to one or more embodiments of the present disclosure, at least a portion of the plurality of data items in the target table have a preset association relationship therebetween; and
After determining the position in which the preset cursor is located, the method further comprises:
Determining a target data item corresponding to the position in which the preset cursor is located;
Determining at least one associated data item that has the preset association relationship with the target data item in the target table; and
Performing distinctive display for the target data item and the at least one associated data item.

According to one or more embodiments of the present disclosure, determining the at least one associated data item that has the preset association relationship with the target data item in the target table comprises:
Determining a target data column in which the target data item is located in the target table; and
Determining at least one associated data item that has the preset association relationship with the target data item in at least one column of the target table whose column number is less than a column number of the target data column.

According to one or more embodiments of the present disclosure, in response to the movement operation triggered by the user for the preset cursor, determining the position in which the preset cursor is located comprises:
In response to the movement operation triggered by the user for the preset cursor, determining the position in which the preset cursor is located in response to detecting that duration of the preset cursor staying at any position in the display page exceeds a preset time threshold.

According to one or more embodiments of the present disclosure, the method further includes:
In response to a lookup operation triggered by the user and based on a lookup parameter input by the user, determining a data item to be displayed that the user looks up; and
Performing distinctive display for the data item to be displayed and at least one associated data item that has the preset association relationship with the data item to be displayed.

According to one or more embodiments of the present disclosure, the method further includes:
In response to a trigger operation of the user for any data item in a first column of the target table, determining at least one associated data item in the target table that has the preset association relationship with a triggered data item currently triggered by the user; and
Performing distinctive display for the triggered data item and the at least one associated data item that has the preset association relationship with the triggered data item.

In a second aspect, according to one or more embodiments of the present disclosure, a data item display device is provided. The device includes:
A display module, configured to display a preset target table in a display page, the target table comprising a plurality of data items, wherein a region corresponding to at least a portion of the plurality of data items is formed by merging at least two rows of preset cells in one column; and
A processing module, configured to, in response to a switching operation triggered by a user in the display page, for each data item and in response to the display page comprising a region corresponding to the data item, fixedly display the data item at a preset display position within the region corresponding to the data item.

According to one or more embodiments of the present disclosure, a preset cursor is further displayed in the display page. The device further includes:
A determination module configured to determine a position in which the preset cursor is located in response to a movement operation triggered by the user for the preset cursor; and
A display module configured to determine a target data item corresponding to the position in which the preset cursor is located and perform distinctive display for the target data item.

According to one or more embodiments of the present disclosure, at least a portion of the plurality of data items in the target table have a preset association relationship therebetween. The device further includes:
A determination module configured to determine a target data item corresponding to the position in which the preset cursor is located, wherein the determination module is further configured to determine, in the target table, at least one associated data item that has the preset association relationship with the target data item; and
A display module configured to perform distinctive display for the target data item and the at least one associated data item.

According to one or more embodiments of the present disclosure, the determination module is configured to:
Determine, in the target table, a target data column in which the target data item is located; and
Determine at least one associated data item, in at least one data column of the target table whose column number is less than that of the target data column, that has the preset association relationship with the target data item.

According to one or more embodiments of the present disclosure, the determination module is configured to determine the position in which the preset cursor is located in response to the movement operation triggered by the user for the preset cursor and in response to detecting that duration of the preset cursor staying at any position in the display page exceeds a preset time threshold.

According to one or more embodiments of the present disclosure, the device further includes:
A determination module configured to determine, in response to a lookup operation triggered by the user and based on a lookup parameter input by the user, a data item to be displayed that the user looks up; and
a display module configured to perform distinctive display for the data item to be displayed and at least one associated data item that has the preset association relationship with the data item to be displayed.

According to one or more embodiments of the present disclosure, the device further includes:
A determination module configured to determine, in response to a trigger operation of the user for any data item in a first column of the target table, at least one associated data item in the target table that has the preset association relationship with a triggered data item currently triggered by the user; and
a display module configured to perform distinctive display for the triggered data item and the at least one associated data item that has the preset association relationship with the triggered data item.

In a third aspect, according to one or more embodiments of the present disclosure, an electronic apparatus is provided. The electronic apparatus includes: at least one processor and a memory, where
the memory has computer-executable instructions stored therein, and
the at least one processor executes the computer-executable instructions stored in the memory, to cause the at least one processor to perform the data item display method according to the first aspect and various possible designs of the first aspect.

In a fourth aspect, according to one or more embodiments of the present disclosure, a computer-readable storage medium is provided. The computer-readable storage medium has computer-executable instructions stored therein that, when executed by a processor, cause the data item display method according to the first aspect and various possible designs of the first aspect to be implemented.

In a fifth aspect, according to one or more embodiments of the present disclosure, a computer program product including a computer program is provided. When the computer program is executed by a processor, the data item display method according to the first aspect and various possible designs of the first aspect is implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments may also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A data item display method, comprising:
displaying a preset target table in a display page, the target table comprising a plurality of data items, wherein a region corresponding to at least a portion of the plurality of data items is formed by merging at least two rows of preset cells in one column; and
in response to a switching operation triggered by a user in the display page, for each of the plurality of data items and in response to the display page comprising a region corresponding to the data item, fixedly displaying the data item at a preset display position within the region corresponding to the data item.

2. The method according to claim 1, wherein a preset cursor is further displayed in the display page, and the method further comprises:
in response to a movement operation triggered by the user for the preset cursor, determining a position in which the preset cursor is located; and
determining a target data item corresponding to the position in which the preset cursor is located and performing distinctive display for the target data item.

3. The method according to claim 2, wherein at least a portion of the plurality of data items in the target table have a preset association relationship therebetween; and
after determining the position in which the preset cursor is located, the method further comprises:
determining a target data item corresponding to the position in which the preset cursor is located;
determining at least one associated data item that has the preset association relationship with the target data item in the target table; and
performing distinctive display for the target data item and the at least one associated data item.

4. The method according to claim 3, wherein determining the at least one associated data item that has the preset association relationship with the target data item in the target table comprises:
determining a target data column in which the target data item is located in the target table; and
determining at least one associated data item that has the preset association relationship with the target data item in at least one column of the target table whose column number is less than a column number of the target data column.

5. The method according to claim 2, wherein, in response to the movement operation triggered by the user for the preset cursor, determining the position in which the preset cursor is located comprises:
in response to the movement operation triggered by the user for the preset cursor, determining the position in which the preset cursor is located in response to detecting that duration of the preset cursor staying at any position in the display page exceeds a preset time threshold.

6. The method according to any one of claims 1 to 5, further comprising:
in response to a lookup operation triggered by the user and based on a lookup parameter input by the user, determining a data item to be displayed that the user looks up; and
performing distinctive display for the data item to be displayed and at least one associated data item that has the preset association relationship with the data item to be displayed.

7. The method according to any one of claims 1 to 5, further comprising:
in response to a trigger operation of the user for any data item in a first column of the target table, determining at least one associated data item in the target table that has the preset association relationship with a triggered data item currently triggered by the user; and
performing distinctive display for the triggered data item and the at least one associated data item that has the preset association relationship with the triggered data item.

8. A data item display device, comprising:
a display module, configured to display a preset target table in a display page, the target table comprising a plurality of data items, wherein a region corresponding to at least a portion of the plurality of data items is formed by merging at least two rows of preset cells in one column; and
a processing module, configured to, in response to a switching operation triggered by a user in the display page, for each data item and in response to the display page comprising a region corresponding to the data item, fixedly display the data item at a preset display position within the region corresponding to the data item.

9. An electronic apparatus, comprising: a processor and a memory, wherein
the memory stores computer-executable instructions therein; and
the processor executes the computer-executable instructions stored in the memory, to cause the processor to perform the data item display method according to any one of claims 1 to 7.

10. A computer-readable storage medium having computer-executable instructions stored therein that, when executed by a processor, cause the data item display method according to any one of claims 1 to 7 to be implemented.

11. A computer program product, comprising a computer program that, when executed by a processor, causes the data item display method according to any one of claims 1 to 7 to be implemented.
